# EUROPÄISCHE PATENTANMELDUNG

(11) **EP 3 435 065 A1**
(43) Veröffentlichungstag der Anmeldung: **30.01.2019**
(21) Anmeldenummer: 18178681.5
(22) Anmeldetag: 20.06.2018
(51) Int. Cl.: G01N 11/04

(54) **VERFAHREN ZUR BESTIMMUNG DER VISKOSITÄT EINES MITTELS EINER PUMPE GEFÖRDERTEN FÖRDERFLUIDS**

(30) Priorität: 27.07.2017 EP 17183471
(71) Anmelder: Sulzer Management AG, 8401 Winterthur (CH)
(72) Erfinder: Beretta-Müller, Arrigo, 5420 Ehrendingen (CH); Berten, Stefan Dr., 8400 Winterthur (CH); Wattinger, Thomas, 5408 Ennetbaden (CH)
(74) Vertreter: Intellectual Property Services GmbH

(57) **Zusammenfassung**

Die Erfindung betrifft eine Verfahren zur Bestimmung der Viskosität eines mittels einer Pumpe geförderten Förderfluids, wobei eine Betriebsgrösse erfasst und einer Auswerteeinheit zugeführt wird, und das Verfahren die folgenden Schritte umfasst: Bereitstellung eines Referenzfluids, Aufnahme einer sich mit dem Referenzfluid einstellenden Referenzkennlinie (H_{W}, Eta_{W}) im Testbetrieb der Pumpe bei einem vorgegebenen Betriebsparameter der Pumpe, Aufnahme einer sich mit dem Förderfluid einstellenden Betriebskennlinie (H_{V}, Eta_{V}) im Förderbetrieb der Pumpe bei dem vorgegebenen Betriebsparameter der Pumpe, Bestimmung der Viskosität des Förderfluids aus einer Abweichung der Betriebskennlinie (H_{V}, Eta_{V}) von der Referenzkennlinie (H_{W}, Eta_{W}) mittels eines in der Auswerteeinheit hinterlegten Viskositätskorrekturalgorithmus.

## Beschreibung

Die Erfindung betrifft ein Verfahren zur Bestimmung der Viskosität eines mittels einer Pumpe geförderten Förderfluids gemäss dem unabhängigen Anspruch 1. Die Erfindung betrifft weiter eine Pumpe zur Durchführung des erfindungsgemässen Verfahrens gemäss dem unabhängigen Anspruch 9.

Die Kenngrößen einer Pumpe, wie Pumphöhe (Head), Fördervolumenstrom (Flussrate), Pumpleistung und Wirkungsgrad hängen entscheidend von der Viskosität des mittels der Pumpe geförderten Fluids ab. Die Kenntnis der Viskosität ist daher bedeutend für die optimale Einstellung der Pumpe im Betrieb.

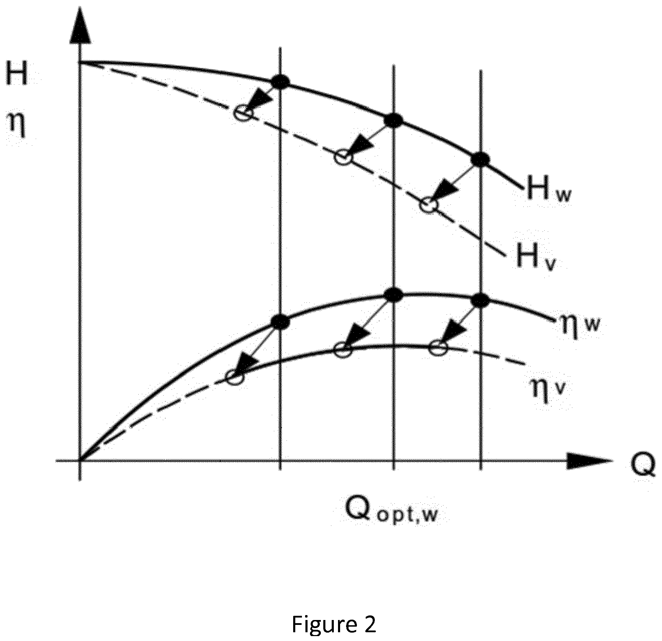

Die Viskosität wird dabei im Labor (Off-Line) oder im laufenden Betrieb der Pumpe (On-Line) über einen Viskosimeter bzw. einen Viskositätssensor erfasst. Aus der ermittelten Viskosität können dann die Betriebsparameter der Pumpe für deren optimalen Betrieb abgeleitet werden. Hierzu werden Kennlinien (performance curves) gemäss Fig.2 herangezogen, die in Bezug auf ein Referenzfluid definiert sind. Üblicherweise dient dabei Wasser als Referenzfluid. Über sogenannte Korrekturfaktoren, die empirisch bestimmt sind und aus der Literatur bekannt sind, kann dann das Leistungsverhalten in Abhängigkeit vom Fördervolumenstrom prognostiziert werden.

In der Praxis wird diese Methode genutzt, um aus dem Leistungsverhalten einer Pumpe unter Laborbedingungen mit typischerweise Wasser als Referenzfluids auf das Leistungsverhalten der Pumpe unter Betriebsbedingungen mit Fluiden anderer, in der Regel höherer Viskosität zu schliessen. Dazu werden im Zuge der Abnahmeprüfung unter Laborbedingungen mit typischerweise Wasser als Referenzfluid die Kennlinien der Pumpe bestimmt. Unter der Voraussetzung, dass die Viskosität des Förderfluids bekannt ist, kann dann anschliessend das Leistungsverhalten unter veränderten Viskositätsbedingungen über die Korrekturfaktoren vorausgesagt werden. Dieses aus dem Stand der Technik bekannte Verfahren macht es möglich, Betriebsparameter einer Pumpe, wie die Drehzahl und das Fördervolumen, an die Viskosität des jeweiligen Fluids anzupassen, um eine bestimmte Pumpleistung zu erzielen.

Für die Bestimmung der Viskosität stehen grundsätzlich zwei unterschiedliche Methoden zur Verfügung: (1) Ableitung der Viskosität aus der Zeit, die erforderlich ist, um ein bestimmten Volumen des Fluids durch eine Kapillare strömen zu lassen. (2) Ableitung der Viskosität aus Scherkräften.

Ein wesentlicher Nachteil von Off-Line Methoden zur Viskositätsbestimmung besteht darin, dass sie nur in relativ grossen Zeitintervallen durchgeführt werden können und daher für Fluide ungeeignet sind, deren Viskosität hohen Schwankungen unterliegt, was bei hochviskosen Fluiden häufig ist. Ein wesentlicher Nachteil von On-Line Methoden zur Viskositätsbestimmung besteht darin, dass sie eine aufwändige Messanordnung erfordern und daher entsprechend störanfällig sind.

Demnach ist es die Aufgabe der Erfindung, ein Verfahren zur Bestimmung der Viskosität eines Förderfluids bereitzustellen, welches kostengünstig On-Line, während des Pumpbetriebs eingesetzt werden kann, die Änderung der Viskosität des Förderfluids zeitnah erfassen kann, und welches mit Messgrössen auskommt, die im Betrieb der Pumpe üblicherweise erfasst werden.

Die diese Aufgabe lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit ein Verfahren zur Bestimmung der Viskosität eines mittels einer Pumpe geförderten Förderfluids, wobei eine Betriebsgrösse erfasst und einer Auswerteeinheit zugeführt wird, und das Verfahren die folgenden Schritte umfasst:
- Bereitstellung eines Referenzfluids,
- Aufnahme einer sich mit dem Referenzfluid einstellenden Referenzkennlinie im Testbetrieb der Pumpe bei einem vorgegebenen Betriebsparameter der Pumpe,
- Aufnahme einer sich mit dem Förderfluid einstellenden Betriebskennlinie im Förderbetrieb der Pumpe bei dem vorgegebenen Betriebsparameter der Pumpe,
- Bestimmung der Viskosität des Förderfluids aus einer Abweichung der Betriebskennlinie von der Referenzkennlinie mittels eines in der Auswerteeinheit hinterlegten Viskositätskorrekturalgorithmus.

Bei dem erfindungsgemäßen Verfahren zur Bestimmung der Viskosität eines geförderten Fluids wird die Viskosität anhand einer Abweichung einer Betriebskennlinie, die sich im Förderbetrieb der Pumpe einstellt, von einer Referenzkennlinie, die im Testbetrieb mit einem Referenzfluid erstellt wurde, mittels eines in der Auswerteeinheit hinterlegten Viskositätskorrekturalgorithmus bestimmt. Dieser Algorithmus basiert dabei im Wesentlichen auf den aus dem Stand der Technik bekannten Korrekturfaktoren. D.h das aus dem Stand der Technik bekannte Verfahren zur Vorhersage der Betriebskennlinie einer Pumpe bei bekannter Viskosität des Fluids wird in der Weise umgekehrt, dass die Abweichung der Betriebskennlinie gegenüber der Referenzkennlinie genutzt wird, um daraus indirekt auf die Viskosität des Förderfluids zu schliessen. Dazu wird die Differenz zwischen der unter Laborbedingungen gemessenen Referenzkennlinie und der unter Betriebsbedingungen gemessenen Betriebskennlinie für das zu untersuchende Förderfluid in einem Algorithmus verwendet, der unter Berücksichtigung der Korrekturfaktoren die Viskosität des Förderfluids ableitet.

Im Rahmen dieser Erfindung kann als Kennlinie (performance curve) z.B die Q-H Kennlinie, bei welcher die Förderhöhe über der Fördermenge aufgetragen ist, die Q-P Kennlinie, bei welcher die Leistung über der Fördermenge aufgetragen ist oder die Q-Eta Kennlinie, bei welcher der Wirkungsgrad über der Fördermenge aufgetragen ist, herangezogen werden. Selbstverständlich können für das erfindungsgemässe Verfahren aber auch andere Arten von Kennlinien herangezogen werden.

Weiter ist unter dem Begriff Leistung die sogenannte Kupplungsleistung zu verstehen, d.h die Leistung, die tatsächlich in die Pumpenwelle reingesteckt wird. Mit Leistung ist demnach nicht die Leistung gemeint, die der Motor der Pumpe aufnimmt. Zudem sei erwähnt, dass der Wirkungsgrad Eta den Quotienten aus der hydraulischen Leistung (Förderhöhe mal Förderfluss mal Dichte mal Erdbeschleunigung) und der Kupplungsleistung angibt.

Ferner ist im Rahmen der Erfindung unter einem Betriebsparameter ein direkt an der Pumpe einstellbarer Soll-Parameter zu verstehen. Dagegen ist unter einer Betriebsgrösse eine Ist-Grösse zu verstehen, die messbar ist bzw. mittels eines Sensor erfasst werden kann.

Ein wesentlicher Vorteil des erfindungsgemässen Verfahrens besteht darin, dass die Viskosität des geförderten Fluids in relativ kurzen Zeitintervallen bestimmt werden kann. Hierdurch wird es möglich, die Viskosität von hochviskosen Fluiden zu bestimmen, deren Viskosität hohen Schwankungen unterliegt. Ein weiterer Vorteil besteht darin, dass keine zusätzlichen Messvorrichtungen an der Pumpe erforderlich sind, sondern das Verfahren mit Messgrössen auskommt, die im Pumpbetrieb ohnehin zur Verfügung stehen. Hierdurch wird das Verfahren weniger störanfällig und kostengünstig.

In einem bevorzugten Ausführungsbeispiel stellt das Referenzfluid Wasser dar, da die im Algorithmus verwendeten Korrekturfaktoren der Literatur entnommen werden können.

Bevorzugt, aber nicht notwendig, kann das Förderfluid ein hochviskoses Fluid darstellen, da dieses in der Regel bei der Förderung starke Viskositätsschwankungen zeigt.

In einem für die Praxis sehr wichtigen Ausführungsbeispiel ist die Betriebsgrösse die Leistung der Pumpe und/oder die Drehzahl der Pumpe und/oder der Druck des geförderten Fluids und/oder der Volumenstrom des geförderten Fluids und/oder die Dichte des geförderten Fluids und/oder die Temperatur des geförderten Fluids. Die genannten Betriebsgrössen werden üblicherweise im Betrieb einer Pumpe gemessen und stehen daher unmittelbar zu Verfügung.

Hierbei hat es sich als vorteilhaft herausgestellt, wenn die Betriebsgrösse mittels eines Sensors, insbesondere eines Drehzahlsensor und/oder eines Drucksensors und/oder eines Volumenstromsensors und/oder eines Dichtesensor und/oder Temperatursensor erfasst wird. Üblicherweise sind Pumpen mit den genannten Sensoren versehen.

Bevorzugt, aber nicht notwendig, kann die Betriebsgrösse dabei mit einer Taktfrequenz von bis zu 1 Minute erfasst werden. Hierdurch ist es möglich, auf kurzfristige Änderungen der Betriebsgrösse reagieren zu können, um Viskositätsschwankungen zeitnah erfassen zu können.

In einem bevorzugten Ausführungsbeispiel wird die Bestimmung der Viskosität des Förderfluids periodisch, insbesondere täglich, stündlich, durchgeführt. Dies erlaubt ein kontinuierliches Monitoring der Viskosität.

Alternativ ist es aber selbstverständlich auch möglich, dass die Bestimmung der Viskosität des Förderfluids bei Bedarf erfolgt, insbesondere bei kurzfristiger Änderung der Betriebsgrösse. Hierdurch kann gezielt auf Änderungen der Betriebsgrösse reagiert werden.

Zudem ist es vorteilhaft, wenn der vorgegebene Betriebsparameter die Leistung der Pumpe und/oder die Drehzahl der Pumpe und/oder der Volumenstrom des geförderten Fluids ist. Üblicherweise sind diese Betriebsparameter direkt an der Pumpe einstellbar. Ausserdem sind für diese Betriebsparameter die Korrekturfaktoren aus der Literatur bekannt.

Auch ist es von Vorteil, wenn die Auswerteeinheit eine Datenverarbeitungseinheit ist. Hierduch kann der Viskositätskorrekturalgorithmus leicht programmiert werden.

Schliesslich hat es sich als vorteilhaft gezeigt, wenn die Datenverarbeitungseinheit in die Pumpe integriert ist. Hierdurch kann die Information aus Betriebsgrössen und Betriebsparameter leicht in die Datenverarbeitungseinheit übertragen werden. Alternativ ist es aber natürlich auch möglich, die Datenverarbeitungseinheit separat von der Pumpe anzuordnen.

Die vorliegende Erfindung betrifft weiter eine Pumpe zur Durchführung des erfindungsgemässen Verfahrens, wobei die Pumpe einen Sensor zur Erfassung einer Betriebsgrösse und eine Auswerteeinheit mit einem Viskositätskorrekturalgorithmus umfasst, und die erfasste Betriebsgrösse der Auswerteeinheit zuführbar ist.

In einem bevorzugten Ausführungsbeispiel ist die Auswerteeinheit eine Datenverarbeitungseinheit. Hierbei hat es sich als vorteilhaft gezeigt, wenn die Datenverarbeitungseinheit in die Pumpe integriert ist.

Das erfindungsgemässe Verfahren wird nachfolgend anhand von Figuren näher erläutert.

Dabei zeigen:
- Fig. 1: ein Diagramm, aus welchem das erfindungsgemässe Verfahren hervorgeht und
- Fig. 2: Pumpkennlinien eines Förderfluids gegenüber einem Referenzfluids.

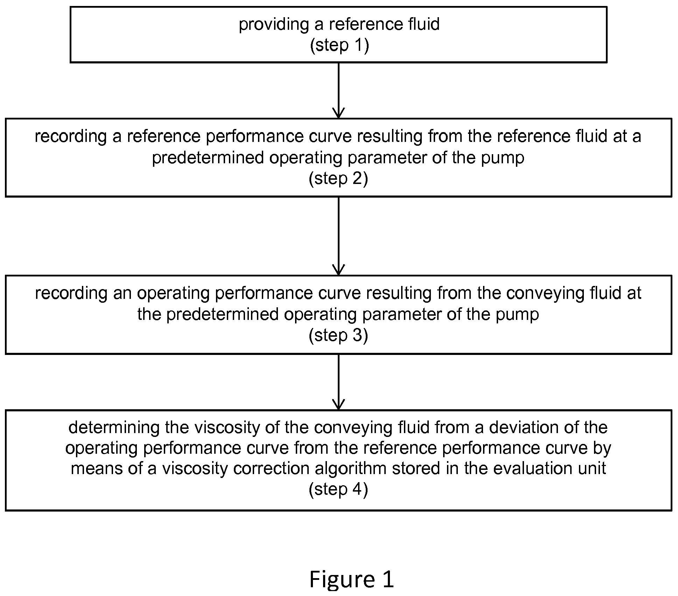

Gemäss Fig.1 weist das erfindungsgemässe Verfahren die folgenden Schritte auf:
Bereitstellung eines Referenzfluids (Schritt 1)
Aufnahme einer sich mit dem Referenzfluid einstellenden Referenzkennlinie bei einem vorgegebenen Betriebsparameter der Pumpe (Schritt 2),
Aufnahme einer sich mit dem Förderfluid einstellenden Betriebskennlinie bei dem vorgegebenen Betriebsparameter der Pumpe (Schritt 3),
Bestimmung der Viskosität des Förderfluids aus einer Abweichung der Betriebskennlinie von der Referenzkennlinie mittels eines in der Auswerteeinheit hinterlegten Viskositätskorrekturalgorithmus (Schritt 4).

Fig.2 zeigt ein Diagramm mit Referenzkennlinien (H_{W}, Eta_{W}) und entsprechenden Betriebskennlinien (H_{V}, Eta_{V}) bei einer bestimmten Drehzahl der Pumpe. Die Kennlinien sind über dem Volumenstrom (Q) aufgetragen. Die Kurven H_{W} und Eta_{W} resultieren dabei erfindungsgemäss aus Schritt 2 und die Kurven H_{V} und Eta_{V} aus Schritt 3 des Verfahrens. Aus der Abweichung der Kurve H_{V} von der Kurve H_{W} bzw. der Kurve Eta_{V} von der Kurve Eta_{W} kann mittels des Viskositätskorrekturalgorithmus auf die Viskosität geschlossen werden (Schritt 4).

## Patentansprüche

1. Verfahren zur Bestimmung der Viskosität eines mittels einer Pumpe geförderten Förderfluids, wobei eine Betriebsgrösse erfasst und einer Auswerteeinheit zugeführt wird, und das Verfahren die folgenden Schritte umfasst:
• Bereitstellung eines Referenzfluids,
• Aufnahme einer sich mit dem Referenzfluid einstellenden Referenzkennlinie (H_{W}, Eta_{W}) im Testbetrieb der Pumpe bei einem vorgegebenen Betriebsparameter der Pumpe,
• Aufnahme einer sich mit dem Förderfluid einstellenden Betriebskennlinie (H_{V}, Eta_{V}) im Förderbetrieb der Pumpe bei dem vorgegebenen Betriebsparameter der Pumpe,
• Bestimmung der Viskosität des Förderfluids aus einer Abweichung der Betriebskennline (H_{V}, Eta_{V}) von der Referenzkennlinie (H_{W}, Eta_{W}) mittels eines in der Auswerteeinheit hinterlegten Viskositätskorrekturalgorithmus.

2. Verfahren nach Anspruch 1 wobei als Referenzfluid Wasser verwendet wird.

3. Verfahren nach Anspruch 1 oder 2 wobei als Förderfluid ein hochviskoses Fluid verwendet wird.

4. Verfahren nach einem der vorherigen Ansprüche, wobei die Betriebsgrösse die Leistung der Pumpe und/oder die Drehzahl der Pumpe und/oder der Druck des geförderten Fluids und/oder der Volumenstrom des geförderten Fluids und/oder die Dichte des geförderten Fluids und/oder die Temperatur des geförderten Fluids ist.

5. Verfahren nach einem der vorherigen Ansprüche, wobei die Betriebsgrösse mittels eines Sensors, insbesondere eines Drehzahlsensor und/oder eines Drucksensors und/oder eines Volumenstromsensors und/oder eines Dichtesensor und/oder Temperatursensor erfasst wird.

6. Verfahren nach einem der vorherigen Ansprüche, wobei die Betriebsgrösse mit einer Taktfrequenz von bis zu 1 Minute erfasst wird.

7. Verfahren nach einem der vorherigen Ansprüche, wobei die Bestimmung der Viskosität des Förderfluids periodisch, insbesondere täglich, stündlich, durchgeführt wird.

8. Verfahren nach einem der vorherigen Ansprüche, wobei die Bestimmung der Viskosität des Förderfluids bei Bedarf erfolgt, insbesondere bei kurzfristiger Änderung der Betriebsgrösse.

9. Verfahren nach einem der vorherigen Ansprüche, wobei der vorgegebene Betriebsparameter die Leistung der Pumpe und/oder die Drehzahl der Pumpe und/oder der Volumenstrom des geförderten Fluids ist.

10. Verfahren nach einem der vorherigen Ansprüche, wobei die Auswerteeinheit eine Datenverarbeitungseinheit ist.

11. Verfahren nach Anspruch 10, wobei die Datenverarbeitungseinheit in die Pumpe integriert ist.

12. Pumpe zur Durchführung eines Verfahrens nach einem der Ansprüche 1 bis 11, wobei die Pumpe einen Sensor zur Erfassung einer Betriebsgrösse und eine Auswerteeinheit mit einem Viskositätskorrekturalgorithmus umfasst, und die erfasste Betriebsgrösse der Auswerteeinheit zuführbar ist.

13. Pumpe nach Anspruch 12, wobei die Auswerteeinheit eine Datenverarbeitungseinheit ist.

14. Pumpe nach Anspruch 13, wobei die Datenverarbeitungseinheit in die Pumpe integriert ist.
